Europäisches Patentamt

European Patent Office

Office européen des brevets

(11) Publication number: **0 210 676**
**A2**

## (12) EUROPEAN PATENT APPLICATION

(21) Application number: **86201049.3**

(22) Date of filing: **17.06.86**

(51) Int. Cl.⁴: **G01N 21/59 , G01N 21/61**

(30) Priority: **26.07.85 GB 8518941**

(43) Date of publication of application:
**04.02.87 Bulletin 87/06**

(84) Designated Contracting States:
**DE FR GB IT NL**

(71) Applicant: **SHELL INTERNATIONALE RESEARCH MAATSCHAPPIJ B.V.
Carel van Bylandtlaan 30
NL-2596 HR Den Haag(NL)**

(72) Inventor: **Cole, John Bernard
c/o P.O. Box 1
Chester Cheshire(GB)**
Inventor: **Durling, Allan Ramsay Charles
c/o P.O. Box 1
Chester Cheshire(GB)**
Inventor: **Smith, Raymind Earnest
c/o P.O. Box 1
Chester Cheshire(GB)**

(74) Representative: **Aalbers, Onno et al
P.O. Box 302
NL-2501 CH The Hague(NL)**

(54) **Optical retro-reflective system for detecting releases of hydrocarbons, atmospheric mist or smoke.**

(57) An optical retro-reflective system for detecting releases of hydrocarbons, atmospheric mist or smoke, for example on marine platforms.

A modulated optical beam of radiation is transmitted towards a remotely-placed panel of retro-reflective sheeting.

The optical transmission is monitored for any reduction caused by particles or droplets on the intervening atmosphere.

The reflective sheeting is in the form of a self-adhesive plastic sheet, which can be fixed to cylindrical or flat surfaces.

## OPTICAL RETRO-REFLECTIVE SYSTEM FOR DETECTING RELEASES OF HYDROCARBONS, ATMOSPHERIC MIST OR SMOKE

The invention relates to an optical retro-reflective system for detecting releases of hydrocarbons, atmospheric mist or smoke.

There is a major and continuing requirement within the industry for instrumentation to detect releases of hydrocarbons, in particular hydrocarbon gas and vapour concentrations. Such instrumentation is particularly required for safety monitoring purposes to avoid the build up of flammable atmospheres and also to detect leaks and minimize product loss.

Mist or smoke detecting systems are used, for example on marine oil production platforms. On such platforms a hazardous situation may arise if a high pressure oil line develops a small area leak - (most commonly at a faulty weld or at a flanged joint distorted by overpressure). In these cases oil will be emitted in a fine mist which is highly inflammable. Further, such sprays of (partially electrically conducting) liquids are effective generators of electrostatic charge which may accumulate on any electrically isolated object in the vicinity, leading to a spark discharge with sufficient energy to cause ignition.

Thus, there is a need for reliable hydrocarbon, mist or smoke detection in order to avoid calamities.

Optical systems for detecting releases of hydrocarbons are based upon the well-known fact that there exist determined wavelengths at which the atmosphere is transmitting but hydrocarbons are absorbing.

Optical retro-reflective atmospheric mist or smoke detecting systems are based upon the transmission of a light beam to a remote passive retro-reflector and monitoring the optical transmission for the reduction associated with particles or droplets in the intervening atmosphere.

The physical principles of such detectors are known to those skilled in the art and will not be described in detail.

The effective response of any form of hydrocarbon mist or smoke detector will be influenced by the quality of the reflector. Usually alignment problems may arise.

Thus, it is an object of the invention to provide an optical retro-reflective system for detecting releases of hydrocarbons, atmospheric mist or smoke which is relatively uncritical to initial optical alignment of the transmitter/receiver unit and is insensitive to apparent variation of transmission associated with flexing of the mounting structure of the system and the resulting variations of optical alignment.

The present invention therefore provides an optical retro-reflective atmospheric system for detecting releases of hydrocarbons, mist or smoke, comprising:

-an optical radiation transmitting means,

-a means for reflecting optical radiation,

-a means for receiving reflected optical radiation, and

- means for detecting a reduction in optical transmission, wherein the area of the reflecting means is sufficiently large to ensure that the incident beam is always fully intercepted.

In an advantageous embodiment the said reflecting means is a panel of retro-reflective sheeting, having an area between 0.1 $m^2$ and 5 $m^2$.

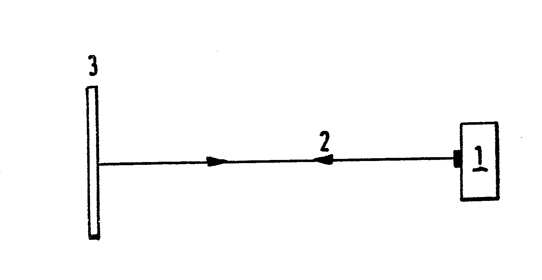

The invention will now be described in more detail by way of example with reference to the accompanying drawing, in which the figure - schematically represents a system for retro-reflective hydrocarbon, mist or smoke detection according to the invention.

Referring now to the figure, a light transmitter/receiver 1, transmits a modulated light beam 2 to a permanent reflector 3. In an advantageous embodiment of the present invention, the reflector 3 may be mounted, for example, up to 100 metres from the transmitter/receiver 1. The transmitter/receiver is connected in any way suitable for the purpose to a means for detecting a reduction in optical transmission (not shown).

For the sake of clarity, no technical details such as optical filters, lenses, detecting electronics and the like, have been represented.

The light beam 2 may be relatively narrow-band light (visible or infrared) or broad-band - (white) light. If a hydrocarbon or an (oil) mist or smoke respectively is present between the transmitter/receiver and the reflector an absorption or an obscuration respectively will occur and will be measured by the detector.

The reflector 3 is a panel of retro-reflective sheeting and has, for example, an area between 0.1 $m^2$ and 5 $m^2$. In an advantageous embodiment the panel is made of plastic. The light beams are reflected straight back to the receiver. In an other advantageous embodiment of the invention the reflective sheeting is provided with a self-adhesive backing in rolls of various width.

In a practical embodiment, the sheeting is 60 cm wide.

The reflector is designed to be equally retro-reflective over all incident angles, with the result that there are no restrictions on its orientation relative to the transmitted light beam. The sheeting can, for example, be fixed to cylindrical as well as flat surfaces.

It is appreciated that for any given installation, the area of the reflective panel should be large enough to ensure that the incident beam is always fully intercepted, taking into account the inherent divergence of the beam, misalignment during installation and subsequent changes of alignment in service.

Although the invention is particularly suitable for detecting oil-mist, the invention is not restricted thereto.

When used as a system for detecting releases of hydrocarbons, it is desirable to make a reference measurement at a second wavelength, which is chosen so that neither the atmosphere nor any hydrocarbon absorbs. The ratio of the absorption over the same path at the two wavelengths can be used to obtain a measurement that is independent of changes that affect both equally. This technique is virtually indispensable for an open-path system used outdoors, in order to cancel out the effects of dirt and condensation on the optical surfaces and fog and rain the air. While sufficiently thick fog will inevitably stop the system working, the reference measurement allows the instrument to distinguish between this condition and a high gas concentration, and to indicate accordingly.

The ratio obtained can be taken to be a function of the total quantity of absorbing gas in the path, which in turn is an integral of concentration over distance. Inherently, therefore, such a system in not capable of indicating absolute concentration, although in practice the integral measurement of gas released in an incident is likely to give at least as good an indication of the severity of an incident as a limited number of point detectors.

There are three infrared regions of interest for gas detection. All hydrocarbons absorb strongly at 3.4 $\mu$m, the fundamental CH stretch wavelength.

A second region of attention is 1 to 2 $\mu$m, where hydrocarbons show overtone lines which, although weak, are accessible using newly available semi-conductor light sources working at ambient temperature.

The third possibility is the absorption in the vicinity of 2.3 $\mu$m, which is exhibited by all aliphatic molecules and arises from combination frequencies in $CH_2$ and $CH_3$ groups.

It appears that the atmospheric transmission is satisfactory at both 2.3 $\mu$m and at a reference wavelength of 2.1 $\mu$m. A practical embodiment of the system according to the invention, wherein moving parts have been eliminated by the use of a pulsed incandescent source and balanced pyroelectric detectors, operates at 2.1 $\mu$m and 2.3 $\mu$m, whereas the retro-reflector was located at 8 metre distance.

Various modifications of the invention will become apparent to those skilled in the art from the foregoing description and accompanying drawings.

Such modifications are intended to fall within the scope of the appended claims.

## Claims

1. An optical retro-reflective atmospheric system for detecting releases of hydrocarbons, mist or smoke, comprising:

-an optical radiation transmitting means

-a means for reflecting optical radiation

-a means for receiving reflected optical radiation and

-means for detecting a reduction in optical transmission, wherein the area of the reflecting means is sufficiently large to ensure that the incident beam is always fully intercepted.

2. The detecting system as claimed in claim 1, wherein the said reflecting means is a panel of retro-reflective sheeting, having an area between 0.1 m² and 5 m².

3. The detecting system as claimed in claim 2, wherein the retro-reflective sheeting is self-adhesive.

4. The detecting system as claimed in claim 2 or 3, wherein the said sheeting has a width of 60 cm.

5. The detecting system as claimed in claim 2, wherein the panel of retro-reflective sheeting is made of plastic.

6. The detecting system as claimed in any one of claims 1-5, wherein the reflective means is equally retro-reflective over all incident angles.

7. The system as claimed in any one of claims 1-6 further comprising a means for transmitting an optical reference beam.